# EUROPÄISCHE PATENTSCHRIFT

(11) **EP 3 820 643 B1**
(45) Veröffentlichungstag und Bekanntmachung des Hinweises auf die Patenterteilung: **29.12.2021**
(21) Anmeldenummer: 20737437.2
(22) Anmeldetag: 07.07.2020
(51) Int. Cl.: B23K 9/32, B23K 9/095

(54) **VORRICHTUNG ZUM THERMISCHEN FÜGEN WENIGSTENS EINES WERKSTÜCKS MIT EINEM BRENNER UND EINER ABSAUGEINRICHTUNG**
DEVICE FOR THERMALLY JOINING AT LEAST ONE WORKPIECE, COMPRISING A TORCH AND A FUME EXTRACTION UNIT
DISPOSITIF POUR L'ASSEMBLAGE THERMIQUE D'AU MOINS UNE PIÈCE, POURVU D'UNE TORCHE ET D'UN DISPOSITIF D'ASPIRATION

(30) Priorität: 17.07.2019 DE 102019119341
(43) Veröffentlichungstag der Anmeldung: 19.05.2021
(73) Patentinhaber: Alexander Binzel Schweisstechnik GmbH & Co. KG, 35418 Buseck (DE)
(72) Erfinder: ROSE, Sascha, 35463 Fernwald (DE)
(74) Vertreter: Müller, Eckhard
(86) Internationale Anmeldenummer: PCT/EP2020/069120
(87) Internationale Veröffentlichungsnummer: WO 2021/008944

(56) Entgegenhaltungen:
- EP-A1- 2 292 367
- EP-B1- 2 292 367
- WO-A1-2006/042572
- US-A1- 2009 321 403

## Beschreibung

Die Erfindung betrifft eine Vorrichtung zum thermischen Fügen wenigstens eines Werkstücks mit einem Brenner und einer Absaugeinrichtung zum Absaugen von beim Schweißen, Schneiden oder Löten entstehenden Rauchgase nach dem Oberbegriff des Anspruchs 1.

Thermische Fügeverfahren nutzen Energie, um die Werkstücke aufzuschmelzen und sie zu verbinden. In der Blechfertigung kommen standardmäßig "MIG", "MAG" sowie "WIG"-Schweißen, Plasmabrenner, E-Hand-Brenner mit deren Hybridverfahren sowie Laserverfahren zum Einsatz. Auch Schneidbrenner auf Basis von Plasma und Laser sind Ziel der Erfindung.

Bei schutzgasunterstützten Lichtbogenschweißverfahren mit abschmelzender Elektrode (MSG) steht "MIG" für "Metall-Inertgas", und "MAG" für "Metall-Aktivgas". Bei schutzgasunterstützten Lichtbogenschweißverfahren mit nicht-abschmelzender Elektrode (WSG) steht "WIG" für "Wolfram-Inertgas". Die erfindungsgemäßen Vorrichtungen können als maschinengeführter Schweißbrenner ausgeführt sein, welche an einem Roboterarm angeordnet sind. Denkbar sind aber auch manuelle oder automatisierte Brenner.

Im Allgemeinen erzeugen Lichtbogenschweißvorrichtungen zum Aufschmelzen des Schweißgutes einen Lichtbogen zwischen dem Werkstück und einer abschmelzenden oder nicht abschmelzenden Schweißelektrode. Das Schweißgut sowie die Schweißstelle werden von einem Schutzgasstrom gegenüber den Atmosphärengasen abgeschirmt.

Dabei ist die Schweißelektrode an einem Brennerkörper eines Schweißbrenners vorgesehen, der mit einem Lichtbogenschweißgerät verbunden ist. Der Brennerkörper enthält gewöhnlich eine Gruppe von innenliegenden, schweißstromführenden Bauteilen, die den Schweißstrom von einer Schweißstromquelle in dem Lichtbogenschweißgerät zur Spitze des Brennerkopfes auf die Schweißelektrode leiten, um dann von dort aus den Lichtbogen zum Werkstück zu erzeugen.

Der Schutzgasstrom umströmt die Schweißelektrode, den Lichtbogen, das Schweißbad und die Wärmeeinflusszone am Werkstück und wird diesen Bereichen dabei über den Brennerkörper des Schweißbrenners zugeführt. Eine Gasdüse leitet den Schutzgasstrom zum Vorderende des Brennerkopfes, wo der Schutzgasstrom etwa ringförmig um die Schweißelektrode aus dem Brennerkopf austritt.

Der zum Schweißen erzeugte Lichtbogen erhitzt während des Schweißvorgangs das zu schweißende Werkstück sowie gegebenenfalls zugeführtes Schweißgut, so dass diese aufgeschmolzen werden.

Neben dem Schweißen kommt auch das Löten in Betracht, um Blechbauteile zu verbinden. Anders als beim Schweißen wird dabei nicht das Werkstück, sondern nur der Zusatzwerkstoff geschmolzen. Der Grund dafür ist, dass beim Löten zwei Kanten durch das Lot als Zusatzwerkstoff miteinander verbunden werden. Die Schmelztemperaturen des Lotwerkstoffes und der Bauteilwerkstoffe liegen weit auseinander, weshalb bei der Bearbeitung nur das Lot schmilzt. Zum Löten eignen sich neben WIG-, Plasma- und MIG-Brennern auch LASER.

Die Lichtbogen-Lötprozesse können im Metallschutzgas-(MSG-L)- und Wolfram-Schutzgas-(WSG-L)-Lötprozesse unterteilt werden. Als Zusatzwerkstoff werden hierbei überwiegend drahtförmige Kupferbasis-Werkstoffe eingesetzt, deren Schmelzbereiche niedriger sind, als die der Grundwerkstoffe. Das Prinzip des MSG-Lichtbogenlötens ist gerätetechnisch weitgehend identisch mit dem MSG-Schweißen mit drahtförmigem Zusatzwerkstoff.

Beim Löten oder Schweißen, wie beispielsweise beim elektrischen Lichtbogenschweißen von Metallen, entstehen in Abhängigkeit von der Zusammensetzung und der Verunreinigung der zu schweißenden oder zu lötenden Materialien mehr oder weniger große Mengen an teilweise gesundheitsschädlichen Abgasen oder Rauchen, welche nicht nur die Sicht zur Schweiß- oder Lötstelle beeinträchtigen, sondern auch beim Benutzer der Schweiß- oder Lötvorrichtung gesundheitliche Schäden hervorrufen können, da Augen und Atmungsorgane gereizt werden. Entsprechend wurden in der Praxis bereits verschiedene Vorrichtungen und Verfahren entwickelt, welche eine Absaugung der Abgase möglichst nahe an ihrer Entstehungsstelle am Brenner ermöglichen.

Die am häufigsten eingesetzten Absaugeinrichtungen bei Schweißrauchabsaugbrennern (RAB) sind nicht regelbar bzw. lediglich am Absauggerät selbst. Eine alternative Regelung der Absaugmotorleistung durch den Schweißer beschreibt die EP 2 556 914 B1. Hierbei soll die Drehzahl des Motors über eine Fernsteuerung durch eine aktive Betätigung einer Fernsteuerung am Handschweißbrenner manuell variiert werden.

Hauptsächlich werden heute aber RAB-Handbrenner mit mechanischen Schiebereglern versehen, durch die der Schweißer einen Teil des Volumenstroms im Bereich des Brennergriffs abzweigen kann. Damit wird der Volumenstrom in Prozessnähe reduziert. Dies geschieht in der Regel über eine aufschiebbare Öffnung auf der Oberseite des Schweißbrennergriffs, die mittels Daumen verschoben werden kann, oder auch durch eine radiale Öffnungsmöglichkeit zwischen Brennergriff und Brennerhals, wie sie in EP 2 556 913 B1 beschrieben ist.

Bei Roboter-RAB-Brennern sind bisher keine spezifischen Volumenstromregelungen bekannt.

Eine lageabhängige Regelung von Schweißparametern ist aus der WO 2006/042572 A1 und aus der WO 2016/060721 A1 bekannt.

Die WO 2006/042572 A1 beschreibt ein Sensormittel zum Abfühlen der Lage und/oder von Lageänderungen des Brenners, wodurch wenigstens eine Kenngröße des Füge-, Trenn- oder Oberflächenbehandlungsverfahrens, insbesondere des Schweißverfahrens, in Abhängigkeit von der abgefühlten Lage und/oder Lageänderungen beeinflussbar ist.

Ferner betrifft die WO 2006/042572 A1 konventionelle Lichtbogenschweißprozesse und -brenner, die über keine Absaugung verfügen.

Aus der DE 20 2009 018 481 U1 sind prozessabhängige Einstellungen der Absaugung bekannt - zum einen ein synchronisiertes Ein- und Ausschalten aber auch prozess- und parameterabhängige Einstellungen. Gemäß der DE 20 2009 018 481 U1 ist vorgesehen, die Schweiß- und Absaugeinrichtung auf Basis des Prozesses zu koppeln. Unter Prozess und Parametern können insbesondere Stromstärke, aber auch die Schweißprozesse, insbesondere Kurzlichtbogen, Impulslichtbogen, Übergangslichtbogen und Sprühlichtbogen verstanden werden.

Die DE 40 07 147 A1 beschreibt ebenfalls das synchronisierte Ein- und Ausschalten. Es soll ein konstanter Volumenstrom auch bei wechselnden Filterbelegungen bzw. Druckabfällen erreicht werden. Hierzu soll Nebenluft zugeführt, zusätzliche Drosseln angesteuert oder der Antrieb der Absaugung gesteuert werden.

Die WO 2016/060721 A1 beschreibt eine bewegungsabhängige Konfiguration des Schweißprozesses, zielt aber konkret nur auf die Regelung einer Schweißstromquelle ab. Absaugbrenner sind weder erwähnt noch dargestellt.

Aus der WO 2013/166247 A1 sind Systeme und Verfahren zum automatischen Regeln des durch eine Schweißrauchpistole gesaugten Rauchstroms bekannt. Die Vorrichtung weist ein Vakuumsystem auf, das zum Ansaugen eines Vakuumrauchflusses durch einen internen Durchgang einer Schweißrauchpistole konfiguriert ist. Ferner ist ein Sensor zur Messung es Vakuumdampfflusses vorgesehen. Ferner sind Bypass-Lösungen auf Basis von Druckdifferenzmessungen bekannt.

Aus der DE 422 50 14 A1 ist eine Absaugvorrichtung für Schweiß- oder Schneidanlagen bekannt, welche einen Brenner und einen Vakuumerzeuger zum Absaugen von Rauchgas aufweist. Am Brenner oder einem Brennerhalter ist eine Absaugdüse befestigt, wobei der mit der Absaugdüse verbundene Vakuumerzeuger ein insbesondere veränderbares und/oder vorgebbares Hochvakuum erzeugt. Ferner sind Magnetventile zur Zuführung von Raumluft beschrieben, die über einen Rechner gesteuert werden.

Aus der US 2009 321 403 A1 ist ein gattungsgemäßes Verfahren zum Absaugen von Dämpfen aus einem Roboterschweißgerät bekannt. Das Verfahren umfasst das Steuern eines Roboterschweißgeräts zur Erzeugung einer Schweißnaht und das Absaugen von Dämpfen, die vom Roboterschweißgerät erzeugt werden.

Aus der EP 2 292 367 A1 sind ein Verfahren und eine Vorrichtung zum Schweißen oder Löten unter Schutzgasatmosphäre bekannt, wobei entstehende Abgase durch wenigstens eine Absaugvorrichtung abgesaugt werden. Die Absaugung wird in Abhängigkeit von an der Schweiß- oder Lötvorrichtung einstellbaren oder voreingestellten Prozessparametern des Schweiß- oder Lötprozesses gesteuert.

Je nach Anwendung kann es erforderlich sein, dass ein die Schweißvorrichtung bedienender Schweißer die Lage des Brenners während des Schweißvorganges relativ zu den zu verschweißenden Werkstücken ändert. Hierbei ist es unter Umständen wünschenswert oder erforderlich, bestimmte Werte des Schweißverfahrens an die jeweilige Lage des Brenners anzupassen.

Die Einstellung des Absaugvolumenstroms bei Brennern, insbesondere bei Rauchabsaugbrennern, ist ein Kompromiss zwischen maximaler Erfassung der Schweißrauche und minimaler Beeinflussung der Schutzgasabdeckung.

Am häufigsten werden Schweißprozesse in Schwerkraftrichtung durchgeführt. Durch den Auftrieb der heißen Rauchgase steigen diese auf, selbst wenn keine Absaugung aktiv ist. Daher ist die notwendige Absaugleistung gegenüber einem angewinkelten Brenner oder bei Überkopf-Schweißen geringer.

Nachteilig an der Verwendung von aus dem Stand der Technik bekannten Schieberegeln am Brenner ist, dass der Gesamtvolumenstrom und damit der Energiebedarf konstant bleiben. Dieser Nachteil betrifft insbesondere auch vollautomatisierte Schweißungen mit Robotern, bei denen der Energiebedarf aufgrund der hohen Einschaltzeiten besonders relevant ist.

Eine manuelle Einstellung des Absaugvolumenstroms am Absauggerät ist in der Praxis beim Schweißen nicht umsetzbar, da in der Regel in wechselnden Positionen ohne Unterbrechung geschweißt wird. Die Schieberegelanpassung ist bei Roboterbrennern nicht praktikabel umsetzbar.

Ausgehend von den zuvor beschriebenen Nachteilen liegt der Erfindung die Aufgabe zugrunde eine Vorrichtung mit einem Brenner und einer Absaugeinrichtung derart weiter zu verbessern, dass schädliche Rauchgase bei Schweiß-, Schneid- oder Lötprozessen abgesaugt und die Prozesse sowohl hinsichtlich der Anwendung als auch energetisch weiter optimiert werden.

Diese Aufgabe wird gelöst mit einer Vorrichtung zum thermischen Fügen von Werkstücken mit einem Brenner und einer Absaugeinrichtung nach Anspruch 1.

Die Erfindung betrifft eine Vorrichtung zum thermischen Fügen von Werkstücken mit einem Brenner und einer Absaugeinrichtung zum Absaugen von beim Schweißen, Schneiden oder Löten entstehenden Rauchgase.

Erfindungsgemäß ist wenigstens ein Sensormittel zum Bestimmen der Lage und/oder Lageänderungen des Brenners und/oder eines Bezugspunktes im Raum relativ zu einer Bezugslage des Brenners und/oder des zu bearbeitenden Werkstückes, derart vorgesehen, dass der am Brenner wirkende Volumenstrom der Absaugeinrichtung in Abhängigkeit von der ermittelten Lage- und/oder Lageänderung des Brenners beeinflussbar ist.

Der Grundgedanke der erfindungsgemäßen Lehre besteht darin, die Lage des Brenners und/oder Lageänderungen des Brenners relativ zu einer Bezugslage des Brenners und/oder einem Bezugspunkt im Raum und/oder den zu verschweißenden Werkstücken durch Sensormittel zu bestimmen. Auf diese Weise kann der Volumenstrom der Absaugeinrichtung in Abhängigkeit von der bestimmten Lage und/oder Lageänderung des Brenners beeinflusst werden.

Aus diesem Grund ist beispielsweise die Bedienung einer als Schweißvorrichtung ausgebildeten Vorrichtung wesentlich vereinfacht und die Qualität der mittels der erfindungsgemäßen Vorrichtung erzeugten Schweißverbindungen, also beispielsweise von Schweißpunkten oder Schweißnähten, wesentlich erhöht. Darüber hinaus werden die Rauchgase sicher und effektiv abgeführt.

Die Beeinflussung des Volumenstroms der Absaugeinrichtung hinsichtlich seiner Werte erfolgt automatisch. Steuermittel sind vorgesehen, die anhand von Ausgangssignalen der Sensormittel die Lage des Brenners bzw. Lageänderungen des Brenners, vorzugsweise auch im dreidimensionalen Raum, erkennen und in Abhängigkeit von der erkannten Lage bzw. Lageänderung den Volumenstrom der Absaugeinrichtung hinsichtlich seiner Werte beeinflussen. Auf diese Weise ist die Bedienung der erfindungsgemäßen Vorrichtung energetisch optimiert und die Qualität einer Schweißverbindung wesentlich erhöht. Die erfindungsgemäß vorgesehenen Sensormittel können entsprechend den jeweiligen Anforderungen die Lage und/oder Lageänderungen des Brenners relativ zu einer Bezugslage und/oder einem Bezugspunkt im Raum erfassen, wobei die Lageänderungen sowohl translatorische als auch rotative Lageänderungen sowie Kombinationen von translatorischen mit rotativen Lageänderungen sein können.

Hierbei ist es möglich, dass Lageänderungen des Brenners während des Einwirkens auf ein und dasselbe Werkstück erfasst werden. Es ist auch möglich, Lageänderungen zu erfassen, bei denen nach einer Lageänderung auf ein anderes Werkstück eingewirkt wird. Wird beispielsweise mittels einer Schweißvorrichtung eine Schweißaufgabe ausgeführt, die sich auf ein erstes Werkstück bezieht, so kann beispielsweise ein Wechsel zu einem anderen Werkstück durch die erfindungsgemäßen Sensormittel erfasst und der Wert des Volumenstroms an die in Bezug auf dieses Werkstück auszuführende Schweißaufgabe angepasst werden.

Es kann anhand der Ausgangs-Signale der Sensormittel jedoch auch ein automatisches Anpassen des Volumenstroms der Absaugeinrichtung nach einer Lageänderung ein neues Werkstück vorgesehen sein. Die ist beispielsweise dann denkbar, wenn in einer vorbestimmten Reihenfolge unterschiedliche, räumlich voneinander getrennte Werkstücke zu bearbeiten sind.

Die erfindungsgemäße Vorrichtung eignet sich besonders gut zur Ausführung unterschiedlicher Schweißverfahren, beispielsweise, Strahlschweißverfahren, Gasschmelz-Schweißverfahren oder Lichtbogen-Schweißverfahren, insbesondere ein Schutzgas-Lichtbogen-Schweißverfahren sein. Die Vorrichtung kann auch als Schneidvorrichtung zur Durchführung beispielsweise eines Plasma- oder Laser-Schneidverfahrens ausgebildet sein.

Auf diese Weise wird stets ein optimaler Volumenstrom abgesaugt, der den Schweißprozess, insbesondere die Schutzgasatmosphäre, nicht negativ beeinflusst, aber eine bestmögliche Erfassung ermöglicht.

Ein weiterer Vorteil besteht in einem optimieren Wirkungsgrad der Vorrichtung aufgrund der aktiv geregelten Absaugleistung des Absauggerätes.

Für den manuellen Bereich bei Schweißverfahren ist außerdem von Vorteil, dass der Schweißer von der manuellen Nachregelung mittels Schieberegler entlastet wird und die Nachteile in Bezug auf den unnötigen Energieverbrauch infolge der unveränderten Gesamtabsaugleistung vermieden werden. Dies betrifft naturgemäß auch vollautomatisierte Anwendungen.

Aufgrund der automatischen Regelung des Absaugvolumenstroms beim Schweißen wird der Schweißer entlastet, es findet eine optimale Erfassung der Rauchgase statt und es wird Energie aufgrund einer einsatzabhängigen Absaugleistung gespart.

Im automatisierten Bereich besteht der Vorteil vor allem darin, robuste Schutzgasabdeckungen trotz Rauchgasabsaugung durch die reduzierte Gefahr des Absaugens von Schutzgas gewährleisten zu können, sowie Energie zu sparen.

Erfindungsgemäß ist eine mit dem wenigstens einen Sensormittel verbundene Steuer- oder Regeleinrichtungen zum automatischen Steuern oder Regeln des Volumenstroms der Absaugeinrichtung am Brenner in Abhängigkeit von der durch den wenigstens einem Sensormittel ermittelten Lage- und/oder Lageänderung des Brenners vorgesehen. Aufgrund der automatischen Regulierung des Volumenstroms ist die Bedienung der erfindungsgemäßen Vorrichtung besonders einfach gestaltet und die Qualität einer Schweißverbindung wird weiter erhöht.

Gemäß einer Weiterbildung der Erfindung ist vorgesehen, dass die Sensormittel wenigstens einen Sensor zum Bestimmen einer Rotationslage und/oder zur Bestimmung der rotativen Lageänderungen und/oder zur Bestimmung der translatorischen Lageänderung des Brenners aufweisen. Bei dieser Ausführungsform ist durch den Sensor bestimmbar, ob sich der Brenner translatorisch bewegt, beispielsweise beim Bilden einer Schweißnaht. Zur Bestimmung translatorischer Lageänderungen des Brenners können beliebige geeignete Sensoren bzw. Sensoranordnungen verwendet werden.

Beispielsweise kann an dem Brenner ein Ultraschallsender angeordnet sein, der Ultraschallwellen abstrahlt, die von einem ortsfesten Ultraschallempfänger empfangen werden. Aus der Laufzeit der Ultraschallwellen von dem Ultraschallsender und damit dem Brenner zu dem Ultraschallempfänger kann dann der Abstand des Brenners von dem Ultraschallsender ermittelt werden. In hierzu entsprechender Weise können die Ultraschallwellen von zwei räumlich zueinander beabstandet angeordneten Ultraschallempfängern empfangen werden, so dass aufgrund der Abstandsänderung des Brenners zu jedem der beiden Ultraschallempfänger translatorische Lageänderungen des Brenners ermittelt werden können. Um Lageänderungen des Brenners im dreidimensionalen Raum eindeutig zu erfassen, können in hierzu entsprechender Weise drei räumlich zueinander beabstandete Ultraschallempfänger vorgesehen sein, so dass sich aus dem jeweiligen Abstand des Brenners von jedem der Ultraschallempfänger die Lage des Brenners im dreidimensionalen Raum bzw. Lageänderungen eindeutig erfassen lässt.

Insbesondere translatorische Lageänderungen können auch beispielsweise mit optischen Sensormitteln erfasst werden. Der Abstand des Brenners von einem Bezugspunkt ist beispielsweise mittels eines Laser-Interferometers ermittelbar. In hierzu entsprechender Weise sind translatorische Lageänderungen des Brenners über zwei voneinander unabhängige Laser-Interferometer und Lageänderungen des Brenners im dreidimensionalen Raum mittels dreier voneinander unabhängiger Laser-Interferometer erfassbar.

In einer weiteren vorteilhaften Ausgestaltung der Erfindung ist vorgesehen, dass der Sensor die Geschwindigkeit und/oder Beschleunigung einer translatorischen und/oder rotativen Bewegung des Brenners bestimmt. Auf diese Weise kann eine noch weitergehende Beeinflussung des Volumenstroms der Absaugeinrichtung erfolgen. Beispielsweise kann bei einer Schweißvorrichtung die Amplitude des Schweißstromes in Abhängigkeit von der Geschwindigkeit, mit der sich der Brenner beim Bilden einer Schweißverbindung über die miteinander zu verschweißenden Werkstücke bewegt, beeinflusst werden. Zur Bestimmung einer Beschleunigung des Brenners können beispielsweise Sensoren verwendet werden, wie sie unter den Bezeichnungen MMA 6260 Q, MMA 6261 Q, MMA 6262 Q und MMA 6263 Q von der Firma Freescale Semiconductor, Inc. Alma School Road Chandler, Arizona, USA (www.freescale.com) oder als 6-Achsen-Bewegungssensor-Modul 6D-BS mit je 3-Achsen Drehraten- und Beschleunigungssensor auf einem Chip der Fa. ELV vertrieben werden.

Gemäß einer weiteren vorteilhaften Ausgestaltung der Erfindung ist vorgesehen, dass der Brenner während des Bearbeitungsvorganges von Hand oder durch eine Handhabungseinrichtung, insbesondere einen Schweißroboter, führbar ist.

Eine weitere Ausgestaltung der Erfindung sieht vor, dass die Bezugslage des Brenners und/oder ein Bezugspunkt im Raum durch die Bedienungsperson, beispielsweise einen Schweißer, und/oder durch die Steuer- und/oder Regeleinrichtung wählbar ist. Bei dieser Ausführungsform ist es insbesondere möglich, die Bezugslage an die Gegebenheiten der jeweiligen Schweißaufgabe bzw. einen die Schweißvorrichtung benutzenden Schweißer anzupassen.

In einer Weiterbildung der Erfindung ist vorgesehen, dass die Steuer- und/oder Regeleinrichtungen in Abhängigkeit von der gewählten Bezugslage und/oder der durch die Sensormittel bestimmten Lage und/oder von Lageänderung des Brenners die Absaugleistung in Abhängigkeit eines Kennfeldes bestimmt, das emissionsrelevante und als Prozessparameter in der Schweißstromquelle vorliegende Verfahrenskenngrößen aufweist, insbesondere die Stromstärke, vorzugsweise die effektive und/oder Spitzenstromstärke, die Schweißleistung und/oder die Schweißgeschwindigkeit, sowie den Draht- bzw. Elektrodendurchmesser, den Zusatzwerkstoff und das Schutzgas. Bei dieser Ausführungsform kann also der Volumenstrom der Absaugeinrichtung entsprechend der Lageinformation oder entsprechend der Lageinformation mit weiteren emissionsrelevanten Verfahrenskenngrößen aus einer Kennlinie oder eines mehrdimensionalen Kennfeldes zugeordnet werden.

So steigt im Allgemeinen die entstehende Schweißrauchmenge mit steigender mittlerer Stromstärke respektive der Abschmelzmenge an. Gleiches gilt für die Zumischung an Aktivgaskomponenten, welche die Emissionen ebenfalls steigern. Bei Impulsschweißprozessen bilden sich dagegen sowohl bei der Pulsfrequenz wie auch der Impulsstromstärke lokale Emissionsminima aus.

Beispielsweise können beim Verschweißen von Blechen einer bestimmten Dicke dem Schweißen in einer bestimmten Position, wie Steig- Überkopf- oder Fallposition, jeweils ein Satz von Werten der Kenngrößen zugeordnet sein. Es ist jedoch auch möglich, die Zuordnung von Werten zu den Kenngrößen des Schweißverfahrens in Abhängigkeit von einem Kennlinienfeld vorzunehmen. So können den Kenngrößen beispielsweise Werte in Abhängigkeit von dem Material und/oder der Dicke der miteinander zu verschweißenden Werkstücke zugeordnet werden. Erfindungsgemäß ist es ausreichend, wenn die Sensormittel die Lage

bzw. Lageänderungen des Brenners in einer Ebene, also zweidimensional, bestimmen. Es kann jedoch auch vorgesehen sein, dass die Sensormittel die räumliche Lage und/oder räumliche Lageänderungen des Brenners im dreidimensionalen Raum erfassen. Bei dieser Ausführungsform kann die Lage bzw. Lageänderung des Brenners besonders genau erfasst werden, so dass sich hinsichtlich der Beeinflussung des Volumenstroms der Absaugeinrichtung besonders vielfältige Möglichkeiten ergeben.

Eine andere Weiterbildung der erfindungsgemäßen Lehre sieht vor, dass sich der Volumenstrom der Absaugeinrichtung mit zunehmenden Anstell- bzw. Brennerneigungswinkel, vorzugsweise kontinuierlich erhöht. Dabei kann die Regelung sowohl bei manuell als auch bei teilautomatisierten oder vollautomatisierten Brennerführungen eingesetzt werden. Der Anstellwinkel ergibt sich hierbei aus dem stechenden oder schleppenden Brennerneigungswinkel in oder entgegen der Vorschubrichtung und dem seitlichen Neigungswinkel orthogonal zur Vorschubrichtung.

Erfindungsgemäß ist es jedoch auch möglich, dass der Volumenstrom an der Absaugdüse durch Variation wenigstens einer Bypassöffnung für die Gasströmung am Brenner oder am brennerseitigen Absaugschlauch oder am absauggeräteseitigen Absaugschlauch oder am Anschlussgehäuse oder an der Absaugeinrichtung oder durch Variation einer oder mehrerer Blenden am Brenner oder am brennerseitigen Absaugschlauch oder am absauggeräteseitigen Absaugschlauch oder am Anschlussgehäuse oder an der Absaugeinrichtung erfolgt.

Basis der Auslegung ist eine in Abhängigkeit der effektiven Absaugleistung an der Absaugdüse des Schweißrauchabsaugbrenners durch eine der folgenden Maßnahmen: Anpassung der Absaugleistung des Absauggerätes und/oder Variation einer oder mehrerer Bypassöffnungen für die Gasströmung am Absaugschlauch oder am maschinenseitigem Anschlussstück und/oder Variation einer oder mehrerer Blenden im Strömungskanal oder an der Absaugdüse zur Beeinflussung des Druckabfalls im Strömungskanal, vorzugsweise am Übergangsstück.

Gemäß einer weiteren Ausgestaltung der Erfindung sind die Sensormittel im Brenner oder in der Verbindung zum brennerseitigen Absaugschlauch angeordnet, vorzugsweise integriert.

Erfindungsgemäß ist es auch möglich, dass die Sensormittel als wenigstens ein elektronisch, induktiv, kapazitiv, optisch und/oder mechanisch wirkender Sensor, insbesondere als Neigungssensor und/oder Beschleunigungssensor und/oder Gyrosensor ausgebildet sind.

Der Sensor kann im Brenner, in der Verbindung zum Schlauchpaket oder im Schlauchpaket nahe dem Brenner integriert werden. Insbesondere digitale elektrische Sensoren wie Gyrosensoren können im Bereich des Handgriffs des Brenners über bereits vorhandene elektrische Anschlüsse versorgt werden. Durch die automatische Anpassung der Absaugwirkleistung auf Basis eines Neigungssensors wird sowohl in manuellen als auch in automatisierten Anwendungen eine einfache Steuerung ohne aufwändige Synchronisation von Schweißprogrammen aus einer SPS oder aus einem Roboter möglich.

Wie erwähnt, kann das wenigstens eine Sensormittel am Handgriff des Brenners angeordnet sein und über elektrische Anschlüsse für die Stromversorgung des Brenners gespeist werden. Denkbar ist auch, dass das Sensormittel über eine Batterie, einen Akku oder mittels Solarzellen elektrisch versorgt wird.

Eine andere Weiterbildung der erfindungsgemäßen Lehre sieht vor, dass die Sensormittel an der Schweißerhand, an einer mechanischen Brennerführung oder einer Abschaltungseinrichtung oder am Arm des Roboters befestigt sind. Die Abschaltungseinrichtung kann zwischen Brenner und Roboter sitzen.

Gemäß einer weiteren Ausgestaltung der Erfindung ist vorgesehen, dass das Steuerungssignal für die Neigung des Brenners aus einer Roboter-Orientierungsinformation oder Orientierungsinformation von Schweißvorrichtungen insbesondere von Orbitalschweißvorrichtungen des Brennerkopfes abgeleitet wird, um damit automatisch den Volumenstrom der Absaugeinrichtung bzw. die Absaugleistung an der Absaugdüse anzupassen.

Nach einer Weiterbildung der Erfindung ist vorgesehen, dass die Signalübertragung zwischen Sensor und Steuerung der Absaugleistung über Kabel oder kabellos mittels Funk oder optischer Signale erfolgt.

Gemäß einer weiteren vorteilhaften Ausgestaltung der Erfindung sind der Brenner und der brennerseitige Absaugschlauch mittels eines Gelenks, bspw. eines Kugelgelenks, wirkverbunden, wobei die Sensormittel im Bereich des Kugelgelenks angeordnet sind. Auf diese Weise können die Sensormittel die Position Anstell- bzw. Brennerneigungswinkel auf sehr einfache Weise, bspw. mechanisch oder elektronisch aus der Stellung des Kugelgelenks bestimmen.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung.

Dabei zeigen zum Teil schematisch:
- Figur 1: eine Vorrichtung zum thermischen Fügen von Werkstücken mit einem Brenner mit Bypassöffnung und einer Absaugeinrichtung,
- Figur 2: den Brenner gemäß Figur 1 in einer Brennerposition mit Anstell- bzw. Brennerneigungswinkel in a) Seitenansicht und b) in einer perspektivischen Darstellung,
- Figur 3: einen Brenner mit externer Rauchabsaugvorrichtung,
- Figur 4: a) ein Anschlussgehäuse für einen Absaugschlauch und b) das Anschlussgehäuse mit Bypassöffnung,
- Figur 5: ein am Handgriff des Brenners angeordnetes Sensormittel,
- Figur 6: ein in einem Kugelgelenk angeordnetes Sensormittel in a) perspektivischer Seitenansicht und b) als Schnittdarstellung,
- Figur 7: das Anschlussgehäuse mit einer Blende,
- Figur 8: die a) Bypassöffnung und b) Blenden an einer Absaugeinrichtung und
- Figur 9: einen Schweißroboter mit Brenner.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

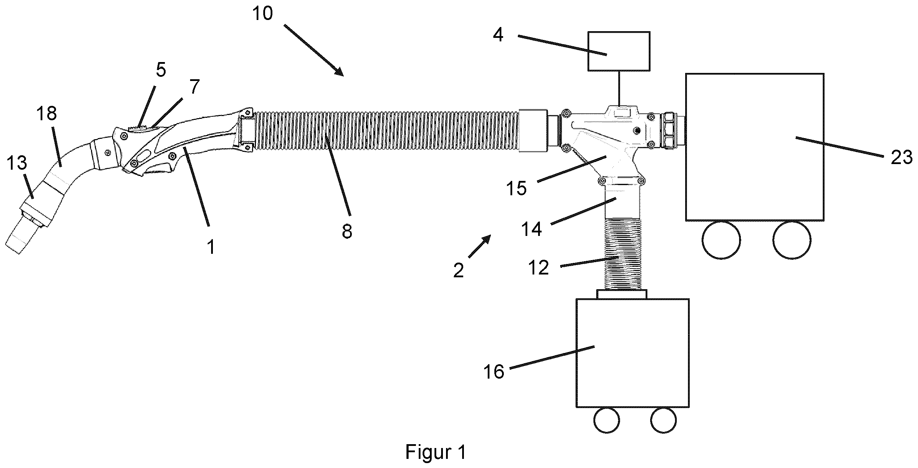

Aus Figur 1 geht eine Vorrichtung 10 zum thermischen Fügen von Werkstücken hervor, welche einen Brenner 1 und eine Absaugeinrichtung 2 zum Absaugen von beim Schweißen, Schneiden oder Löten entstehenden Rauchgasen aufweist.

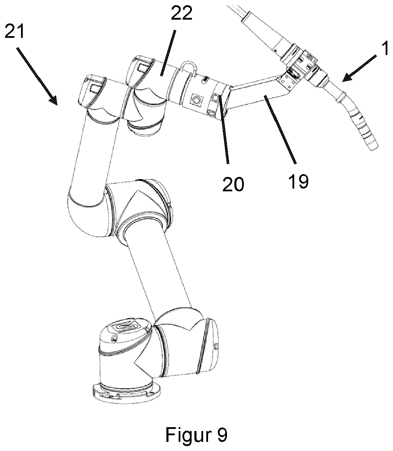

Der Brenner 1 kann während des Bearbeitungsvorganges von Hand oder durch eine Handhabungseinrichtung, insbesondere einen Schweißroboter 21, geführt werden. Einen derartigen Schweißroboter 21 wird durch Figur 9 verdeutlicht. Die Figuren 1, 2, 3 und 5 zeigen Handbrenner.

Die Vorrichtung 10 ist zur Ausführung unterschiedlicher Schweißverfahren geeignet, beispielsweise Strahlschweißverfahren, Gasschmelz-Schweißverfahren oder Lichtbogen-Schweißverfahren, insbesondere ein Schutzgas-Lichtbogen-Schweißverfahren geeignet. Die Vorrichtung 10 kann auch als Schneidvorrichtung zur Durchführung beispielsweise eines Plasma- oder Laser-Schneidverfahrens ausgebildet sein.

Der Figur 1 ist ebenfalls eine mit dem Brenner 1 verbundene Absaugeinrichtung 2 zu entnehmen, welche einen brennerseitigen Absaugschlauch 8, ein Anschlussgehäuse 15 mit Anschluss 14 und ein absauggeräteseitigen Absaugschlauch 12 aufweist, der in ein Absauggerät 16 geführt ist.

Die Absaugeinrichtung 2 weist ferner ein Absaugrohr 18 und eine Absaugdüse 13 auf.

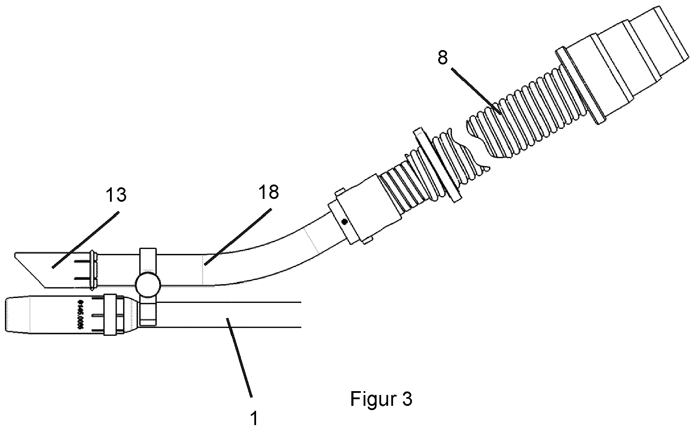

Gemäß Figur 3 ist ein Brenner 1 mit einer nicht im Brenner 1 integrierten Absaugeinrichtung 2 zu erkennen. Der Absaugschlauch 8 mit Absaugrohr 18 und Absaugdüse 13 verläuft separat vom Brenner 1.

Bei den Ausführungsformen gemäß Figuren 1, 2, 5 und 9 ist die Absaugeinrichtung 2 im Brenner 1 integriert.

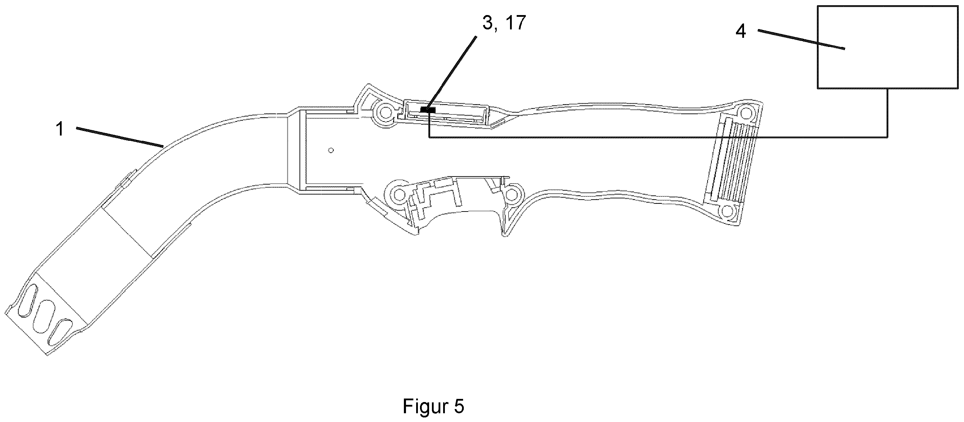

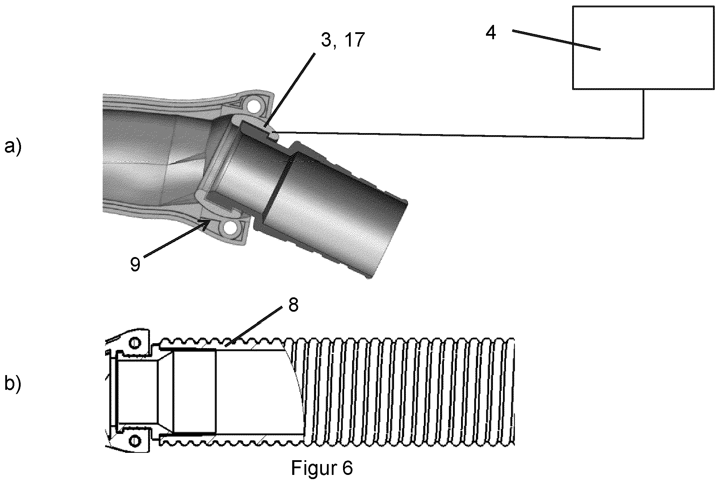

Ein in den Figuren 5 und 6 dargestelltes Sensormittel 3 ist zum Bestimmen der Lage und/oder Lageänderungen des Brenners 1 und/oder eines Bezugspunktes im Raum relativ zu einer Bezugslage des Brenners 1 und/oder des zu bearbeitenden Werkstückes, derart vorgesehen, dass der am Brenner 1 wirkende Volumenstrom der Absaugeinrichtung 2, insbesondere an einer Absaugdüse 13, in Abhängigkeit von der ermittelten Lage- und/oder Lageänderung des Brenners 1 beeinflusst wird.

Im vorliegenden Ausführungsbeispiel weisen die Sensormittel 3 wenigstens einen Sensor 17 zum Bestimmen einer Rotationslage und/oder zur Bestimmung der rotativen Lageänderungen und/oder zur Bestimmung der translatorischen Lageänderung des Brenners 1 auf. Die Sensormittel 3 bestimmen die Geschwindigkeit und/oder Beschleunigung einer translatorischen und/oder rotativen Bewegung des Brenners 1.

Beispielsweise kann bei einer Schweißvorrichtung die Amplitude des Schweißstromes in Abhängigkeit von der Geschwindigkeit, mit der sich der Brenner beim Bilden einer Schweißverbindung über die miteinander zu verschweißenden Werkstücke bewegt, beeinflusst werden.

Vorliegend können die Sensormittel 3 bzw. die Sensoren 17 im Brenner 1 oder in der Verbindung zum brennerseitigen Absaugschlauch 8 angeordnet, vorzugsweise integriert sein.

Die Sensormittel 3 können als wenigstens ein elektronisch, induktiv, kapazitiv, optisch und/oder mechanisch wirkender Sensor, insbesondere als Neigungssensor und/oder Beschleunigungssensor und/oder Gyrosensor ausgebildet sein.

Gemäß Figur 5 sind die Sensormittel 3 am Handgriff des Brenners 1 angeordnet. Sie können über elektrische Anschlüsse für die Stromversorgung des Brenners 1 gespeist werden. Denkbar ist auch, dass das Sensormittel 3 über eine Batterie, einen Akku oder mittels Solarzellen elektrisch versorgt wird.

Die Sensormittel 3 bzw. die Sensoren 17 können aber auch an einer mechanischen Brennerführung 19 oder einer Abschaltungseinrichtung 20 oder am Arm 22 des Roboters 21 befestigt. Die Abschaltungseinrichtung 20 sitzt zwischen Brenner 1 und Roboter 21, wie Figur 9 verdeutlicht.

Das Steuerungssignal für die Neigung des Brenners 1 kann aus einer Roboter-Orientierungsinformation oder aus Orientierungsinformationen von Schweißvorrichtungen, insbesondere von Orbitalschweißvorrichtungen des Brennerkopfes abgeleitet werden, um damit automatisch den Volumenstrom der Absaugeinrichtung 2 bzw. die Absaugleistung an der Absaugdüse 13 anzupassen.

In dem Ausführungsbeispiel der Erfindung gemäß Figur 6 a) und b) können die Sensormittel 3 mit wenigstens einem Sensor 17 auch im Bereich eines Gelenks, vorliegend eines Kugelgelenks 9, vorgesehen sein. Das Kugelgelenk 9 ist vorliegend zwischen Brenner 1 und brennerseitigem Absaugschlauch 8 angeordnet.

Vorliegend erfolgt die Beeinflussung des Volumenstroms der Absaugeinrichtung 2 hinsichtlich seiner Werte in vorteilhafter Weise automatisch. Hierfür ist eine Steuer- und/oder Regeleinrichtung 5, 6 vorgesehen, die anhand von Ausgangssignalen der Sensoren 3, 17 die Lage des Brenners 1 bzw. Lageänderungen des Brenners 1, vorzugsweise auch im dreidimensionalen Raum, erkennt und in Abhängigkeit von der erkannten Lage bzw. Lageänderung den Volumenstrom der Absaugeinrichtung 2 hinsichtlich seiner Werte beeinflusst.

Aus Figur 1 gehen derartige mit dem wenigstens einen Sensormittel 3 verbundene Steuer- oder Regeleinrichtungen 4, 5 zum Steuern oder Regeln des Volumenstroms der Absaugeinrichtung 2 am Brenner 1 in Abhängigkeit von der durch das wenigstens eine Sensormittel 3 ermittelten Lage- und/oder Lageänderung des Brenners 1 hervor. Die Bezugslage des Brenners 1 und/oder ein Bezugspunkt im Raum ist durch die Bedienperson und/oder durch die Steuer- oder Regeleinrichtungen 4, 5 wählbar.

Die Steuereinrichtung 4 bestimmt in Abhängigkeit von der gewählten Bezugslage und/oder der durch die Sensormittel 3 bestimmten Lage und/oder von Lageänderung des Brenners 1 die Absaugleistung in Abhängigkeit eines Kennfeldes, das emissionsrelevante Verfahrenskenngrößen, insbesondere der Stromstärke, vorzugsweise der effektiven und/oder Spitzenstromstärke, der Schweißleistung und/oder der Schweißgeschwindigkeit, sowie des Draht- bzw. Elektrodendurchmessers, des Zusatzwerkstoffs und des Schutzgases berücksichtigen kann. Diese Verfahrenskenngrößen liegen als Prozessparameter in der Schweißstromquelle 23 vor.

In der Regel steigt die entstehende Schweißrauchmenge mit steigender mittlerer Stromstärke respektive der Abschmelzmenge an. Gleiches gilt für die Zumischung an Aktivgaskomponenten, welche die Emissionen ebenfalls steigern. Bei Impulsschweißprozessen bilden sich dagegen sowohl bei der Pulsfrequenz wie auch der Impulsstromstärke lokale Emissionsminima aus.

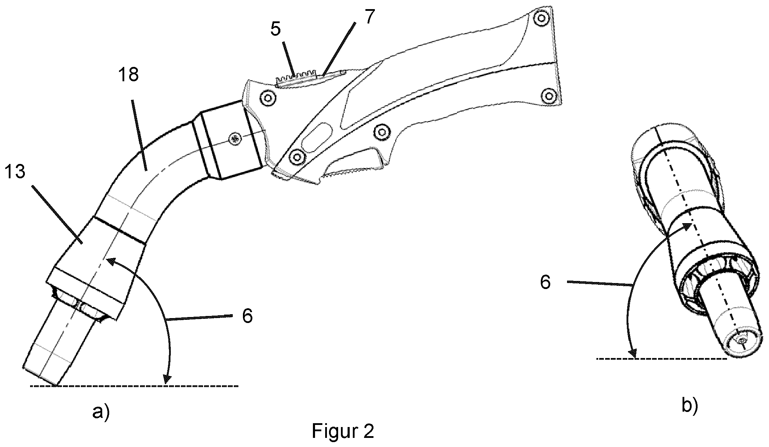

Im vorliegenden Ausführungsbeispiel soll die Absaugleistung mit steigendem Anstell- bzw. Brennerneigungswinkel 6 erhöht werden, wobei der Anstieg der Kennlinie manuell, über Programme oder in Abhängigkeit des Schweißverfahrens und/oder des Brennertyps verschoben werden kann. Der Anstell- bzw. Brennerneigungswinkel 6 ergibt sich hierbei aus dem stechenden oder schleppenden Brennerneigungswinkel in oder entgegen der Vorschubrichtung und dem seitlichen Neigungswinkel orthogonal zur Vorschubrichtung, wie aus Figur 2 a) und b) ersichtlich ist.

Vorliegend erhöht sich der Volumenstrom der Absaugeinrichtung 2 mit zunehmenden Anstell- bzw. Brennerneigungswinkel 6, vorzugsweise kontinuierlich.

Aus Figuren 1 und 2 geht hervor, dass der Volumenstrom an der Absaugdüse 13 durch Variation wenigstens einer Bypassöffnung 7 für die Gasströmung am Brenner 1 geregelt wird.

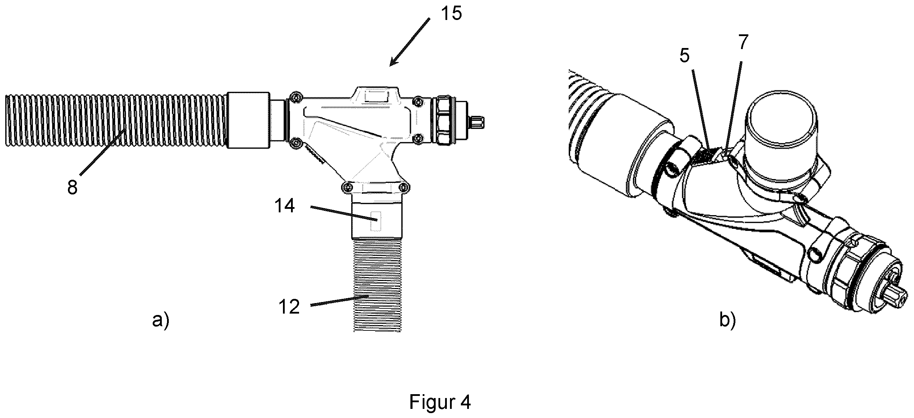

Bei der Ausführungsform gemäß Figur 4 a) ist ein Anschlussgehäuse 15 für einen brennerseitigen Absaugschlauch 8 und einen absauggeräteseitigen Absaugschlauch 12 zu erkennen, welches gemäß Figur 4 b) die Bypassöffnung 7 aufweist.

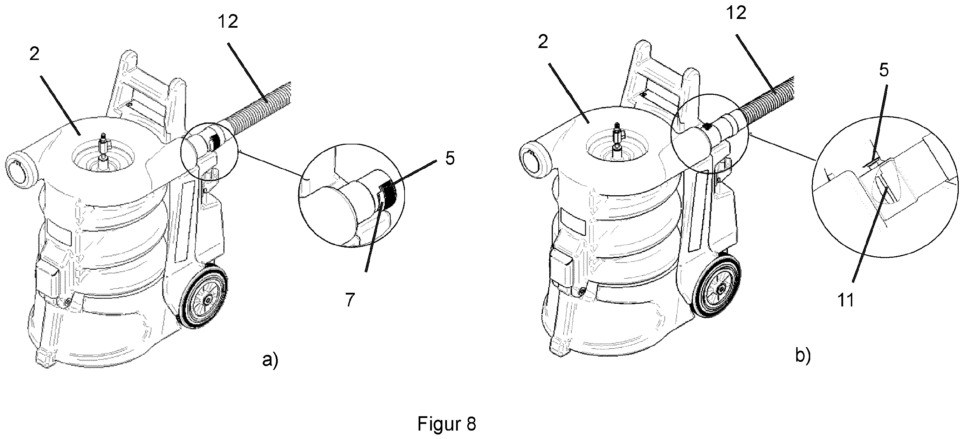

Gemäß Figur 8 a) ist die Bypassöffnung 7 an der Absaugeinrichtung 2 angeordnet. Bei einer nicht dargestellten Ausführungsform kann die Bypassöffnung 7 am absauggeräteseitigen Absaugschlauch 12 vorgesehen sein.

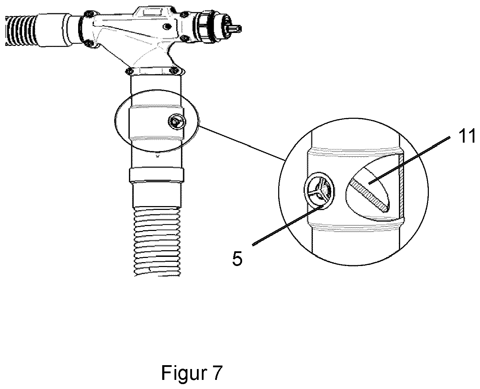

Figur 7 zeigt das Anschlussgehäuse 15 für einen brennerseitigen Absaugschlauch 8 mit dem absauggeräteseitigen Absaugschlauch 12 und mit einer oder mehreren Blenden 11 zur Variation des Volumenstroms an der Absaugdüse 13. Gemäß Figur 8 b) sind die Blenden an der Absaugeinrichtung 2 vorgesehen. Bei nicht dargestellten Ausführungsformen können die Blenden 11 auch am Brenner 1 oder am brennerseitigen Absaugschlauch 8 oder am absauggeräteseitigen Absaugschlauch 12 vorgesehen sein.

Das Steuerungssignal für die Neigung des Brenners 1 kann aus einer Roboter-Orientierungsinformation des Brennerkopfes abgeleitet werden.

Mit der erfindungsgemäßen Vorrichtung können Lageänderungen des Brenners 1 während des Einwirkens auf ein und dasselbe Werkstück erfasst werden. Es ist auch möglich, Lageänderungen zu erfassen, bei denen nach einer Lageänderung auf ein anderes Werkstück eingewirkt wird. Wird beispielsweise mittels einer Schweißvorrichtung eine Schweißaufgabe ausgeführt, die sich auf ein erstes Werkstück bezieht, so kann beispielsweise ein Wechsel zu einem anderen Werkstück durch die erfindungsgemäßen Sensormittel 3 erfasst und der Wert des Volumenstroms an die in Bezug auf dieses Werkstück auszuführende Schweißaufgabe angepasst werden.

Es kann anhand der Ausgangs-Signale der Sensormittel 3 jedoch auch ein automatisches Anpassen des Volumenstroms der Absaugeinrichtung nach einer Lageänderung ein neues Werkstück vorgesehen sein. Die ist beispielsweise dann denkbar, wenn in einer vorbestimmten Reihenfolge unterschiedliche, räumlich voneinander getrennte Werkstücke zu bearbeiten sind.

Figuren 1, 2, 4 b) und 7 a) zeigen, dass der Volumenstrom an der Absaugeinrichtung 2 durch Variation wenigstens einer Bypassöffnung 7 für die Gasströmung am Absaugschlauch 8 der Absaugeinrichtung 2 oder an einem absaugseitigem Anschluss 14 oder durch Variation einer oder mehrerer Blenden 11 im Absaugströmungskanal oder an der Absaugdüse 13 der Ansaugeinrichtung 2, vorzugsweise am Übergangsstück des Anschlussgehäuses 15 des Absaugrohrs erfolgt. Die Blenden 11 können in der Art von Drosselklappen ausgebildet sein.

Die Signalübertragung zwischen Sensormittel 3 und Steuereinrichtung 4 der Absaugleistung kann über Kabel oder kabellos mittels Funk oder optischer Signale erfolgen.

### Bezugszeichenliste

- 1: Brenner
- 2: Absaugeinrichtung
- 3: Sensormittel
- 4: Steuereinrichtung
- 5: Regeleinrichtung
- 6: Anstellwinkel bzw. Brennerneigungswinkel
- 7: Bypassöffnung
- 8: brennerseitiger Absaugschlauch
- 9: Gelenk
- 10: Vorrichtung
- 11: Blenden
- 12: absauggeräteseitiger Absaugschlauch
- 13: Absaugdüse
- 14: Absauggeräteseitiger Anschluss
- 15: Anschlussgehäuse
- 16: Absauggerät
- 17: Sensor
- 18: Absaugrohr
- 19: mechanische Brennerführung
- 20: Abschaltungseinrichtung
- 21: Schweißroboter
- 22: Arm des Roboters
- 23: Schweißstromquelle

## Patentansprüche

1. Vorrichtung (10) zum thermischen Fügen von Werkstücken mit einem Brenner (1) und einer Absaugeinrichtung (2) zum Absaugen von beim Schweißen, Schneiden oder Löten entstehenden Rauchgasen, **gekennzeichnet durch** wenigstens ein Sensormittel (3) zum Bestimmen der Lage und/oder Lageänderungen des Brenners (1) und/oder eines Bezugspunktes im zweidimensionalen oder dreidimensionalen Raum relativ zu einer Bezugslage des Brenners (1) und/oder des zu bearbeitenden Werkstückes, derart, dass der am Brenner (1) wirkende Volumenstrom der Absaugeinrichtung (2) in Abhängigkeit von der ermittelten Lage-und/oder Lageänderung des Brenners (1) im zweidimensionalen oder dreidimensionalen Raum beeinflussbar ist, wobei eine mit dem wenigstens einen Sensormittel (3) verbundene Steuer-oder Regeleinrichtungen (4, 5) zum Steuern oder Regeln des Volumenstroms der Absaugeinrichtung (2) am Brenner (1) in Abhängigkeit von der durch das wenigstens eine Sensormittel (3) ermittelten Lage- und/oder Lageänderung des Brenners (1) im zweidimensionalen oder dreidimensionalen Raum vorgesehen ist.

2. Vorrichtung (10) nach Anspruch 1, **dadurch gekennzeichnet, dass** die Sensormittel (3) wenigstens einen Sensor (17) zum Bestimmen einer Rotationslage und/oder zur Bestimmung der rotativen Lageänderungen und/oder zur Bestimmung der translatorischen Lageänderung des Brenners (1) aufweisen.

3. Vorrichtung (10) nach einem der Ansprüche 1 oder 2, **dadurch gekennzeichnet, dass** das Sensormittel (3) die Geschwindigkeit und/oder Beschleunigung einer translatorischen und/oder rotativen Bewegung des Brenners (1) bestimmt.

4. Vorrichtung (10) nach einem der vorhergehenden Ansprüche, **dadurch gekennzeichnet, dass** der Brenner (1) während des Bearbeitungsvorganges von Hand oder durch eine Handhabungseinrichtung, insbesondere einen Schweißroboter, führbar ist.

5. Vorrichtung (10) nach einem der vorhergehenden Ansprüche, **dadurch gekennzeichnet, dass** die Bezugslage des Brenners (1) und/oder ein Bezugspunkt im Raum durch die Bedienperson und/oder durch die Steuer- und/oder Regeleinrichtungen (4, 5) wählbar ist.

6. Vorrichtung (10) nach einem der vorhergehenden Ansprüche, **dadurch gekennzeichnet, dass** die Steuer- und/oder Regeleinrichtung (4, 5) in Abhängigkeit von der gewählten Bezugslage und/oder der durch die Sensormittel (3) bestimmten Lage und/oder von einer Lageänderung des Brenners (1) die Absaugleistung in Abhängigkeit eines Kennfeldes bestimmt, das emissionsrelevante und als Prozessparameter in der Schweißstromquelle (23) vorliegende Verfahrenskenngrößen aufweist, insbesondere die Stromstärke, vorzugsweise die effektive und/oder Spitzenstromstärke, die Schweißleistung und/oder die Schweißgeschwindigkeit sowie den Draht- bzw. Elektrodendurchmesser, die Zusatzwerkstoffart und die Schutzgasart.

7. Vorrichtung (10) nach einem der vorhergehenden Ansprüche, **dadurch gekennzeichnet, dass** sich der Volumenstrom der Absaugeinrichtung (2) mit zunehmendem Anstellwinkel (6) bzw. Brennerneigungswinkel, vorzugsweise kontinuierlich, erhöht.

8. Vorrichtung (10) nach einem der vorhergehenden Ansprüche, **dadurch gekennzeichnet, dass** der Volumenstrom an der Absaugdüse (13) durch Variation wenigstens einer Bypassöffnung (7) für die Gasströmung am Brenner (1) oder am brennerseitigen Absaugschlauch (8) oder am absauggeräteseitigen Absaugschlauch (12) oder am Anschlussgehäuse (15) oder an der Absaugeinrichtung (2) oder durch Variation einer oder mehrerer Blenden (11) am Brenner (1) oder am brennerseitigen Absaugschlauch (8) oder am absauggeräteseitigen Absaugschlauch (12) oder am Anschlussgehäuse (15) oder an der Absaugeinrichtung (2) erfolgt.

9. Vorrichtung (10) nach einem der vorhergehenden Ansprüche, **dadurch gekennzeichnet, dass** die Sensormittel (3) im Brenner (1) oder in der Verbindung zum brennerseitigen Absaugschlauch (8) angeordnet, vorzugsweise integriert sind.

10. Vorrichtung (10) nach einem der vorhergehenden Ansprüche, **dadurch gekennzeichnet, dass** die Sensormittel (3) als wenigstens ein elektronisch, induktiv, kapazitiv, optisch und/oder mechanisch wirkender Sensor, insbesondere Neigungssensor oder Gyrosensor, ausgebildet sind.

11. Vorrichtung (10) nach einem der vorhergehenden Ansprüche, **dadurch gekennzeichnet, dass** die Sensormittel (3) an der Schweißerhand, an einer mechanischen Brennerführung (19) oder einer Abschaltungseinrichtung (20) oder am Arm (22) des Roboters (21) befestigt sind.

12. Vorrichtung (10) nach einem der vorhergehenden Ansprüche, **dadurch gekennzeichnet, dass** das Steuerungssignal für die Neigung des Brenners (1) aus einer Roboter-Orientierungsinformation des Brennerkopfes abgeleitet wird.

13. Vorrichtung (10) nach einem der vorhergehenden Ansprüche, **dadurch gekennzeichnet, dass** die Signalübertragung zwischen Sensormittel (3) und Steuereinrichtung (4) der Absaugleistung über Kabel oder kabellos mittels Funk oder optischer Signale erfolgt.

14. Vorrichtung (10) nach einem der vorherigen Ansprüchen, **dadurch gekennzeichnet, dass** der Brenner (1) und der brennerseitige Absaugschlauch (8) mittels eines Gelenks (9), insbesondere eines Kugelgelenks wirkverbunden sind, wobei die Sensormittel (3) im Bereich des Kugelgelenks (9) angeordnet sind.

## Claims

1. Device (10) for thermally joining workpieces, comprising a torch (1) and an extraction unit (2) for extracting fumes that are produced during welding, cutting or soldering processes, **characterized by** at least one sensor means (3) for determining the position and/or changes in the position of the torch (1) and/or a reference point in the two-dimensional or three-dimensional area relative to a reference position of the torch (1) and/or of the workpiece to be processed, in such a way that the volume flow of the extraction unit (2) acting on the torch (1) can be influenced according to the determined position and/or change in position of the torch (1) in the two-dimensional or three-dimensional space, wherein an open-loop or closed-loop control unit (4, 5) is provided, connected to the at least one sensor means (3) and intended for the open-loop or closed-loop control of the volume flow of the extraction unit (2) at the torch (1) according to the position and/or change in position of the torch (1), determined by the at least one sensor means (3), in the two-dimensional or three-dimensional area.

2. Device (10) according to Claim 1, **characterized in that** the sensor means (3) have at least one sensor (17) for determining a rotational position and/or for determining the rotary changes in position and/or for determining the translatory change in position of the torch (1).

3. Device (10) according to either of Claims 1 and 2, **characterized in that** the sensor means (3) determines the speed and/or acceleration of a translatory and/or rotary movement of the torch (1).

4. Device (10) according to one of the preceding claims, **characterized in that** the torch (1) can be guided during the processing operation manually or by a handling unit, in particular a welding robot.

5. Device (10) according to one of the preceding claims, **characterized in that** the reference position of the torch (1) and/or a reference point in the area can be chosen by the operator and/or by the open-loop and/or closed-loop control units (4, 5).

6. Device (10) according to one of the preceding claims, **characterized in that** the open-loop and/or closed-loop control unit (4, 5) determines the extraction power according to the chosen reference position and/or the position determined by the sensor means (3) and/or a change in position of the torch (1) in accordance with a characteristic map that has process characteristics relevant to emissions and present as process parameters in the welding current source (23), in particular the current intensity, preferably the effective and/or peak current intensity, the welding power and/or the welding speed and also the wire or electrode diameter, the type of filler material and the type of shielding gas.

7. Device (10) according to one of the preceding claims, **characterized in that** the volume flow of the extraction unit (2) increases, preferably continuously, as the inclination angle (6) or torch tilt angle increases.

8. Device (10) according to one of the preceding claims, **characterized in that** the volume flow at the extraction nozzle (13) is provided by variation of at least one bypass opening (7) for the gas flow at the torch (1) or at the torch-side extraction hose (8) or at the extraction-device-side extraction hose (12) or at the connection housing (15) or at the extraction unit (2) or by variation of one or more protective shields (11) at the torch (1) or at the torch-side extraction hose (8) or at the extraction-device-side extraction hose (12) or at the connection housing (15) or at the extraction unit (2).

9. Device (10) according to one of the preceding claims, **characterized in that** the sensor means (3) are arranged, preferably integrated, in the torch (1) or in the connection to the torch-side extraction hose (8).

10. Device (10) according to one of the preceding claims, **characterized in that** the sensor means (3) are formed as at least one electronically, inductively, capacitively, optically and/or mechanically acting sensor, in particular a tilt sensor or a gyro sensor.

11. Device (10) according to one of the preceding claims, **characterized in that** the sensor means (3) are fastened on the welder's hand, on a mechanical torch guide (19) or a switch-off unit (20) or on the arm (22) of the robot.

12. Device (10) according to one of the preceding claims, **characterized in that** the control signal for the tilt of the torch (1) is derived from robot orientation information of the torch head.

13. Device (10) according to one of the preceding claims, **characterized in that** the signal transmission between the sensor means (3) and the control unit (4) of the extraction power takes place by way of cables or wirelessly by means of radio or optical signals.

14. Device (10) according to one of the preceding claims, **characterized in that** the torch (1) and the torch-side extraction hose (8) are operatively connected by means of a joint (9), in particular a ball joint, wherein the sensor means (3) are arranged in the region of the ball joint (9).

## Revendications

1. Dispositif (10) pour l'assemblage thermique de pièces, comprenant une torche (1) et un dispositif d'aspiration (2) destiné à aspirer des gaz de fumée créés lors du soudage, de la découpe ou du brasage, **caractérisé par** au moins un moyen de détection (3) destiné à déterminer la position et/ou des changements de position de la torche (1) et/ou d'un point de référence dans l'espace bidimensionnel ou tridimensionnel par rapport à une position de référence de la torche (1) et/ou de la pièce à usiner de telle sorte que le débit volumique du dispositif d'aspiration (2) agissant au niveau de la torche (1) peut être affecté en fonction de la position et/ou du changement de position déterminé(e)s de la torche (1) dans l'espace bidimensionnel ou tridimensionnel, un dispositif de commande ou de régulation (4, 5) relié audit au moins un moyen de détection (3) étant prévu pour commander ou réguler le débit volumique du dispositif d'aspiration (2) au niveau de la torche (1) en fonction de la position et/ou du changement de position de la torche (1) dans l'espace bidimensionnel ou tridimensionnel, déterminé(e)s par ledit au moins un moyen de détection (3).

2. Dispositif (10) selon la revendication 1, **caractérisé en ce que** les moyens de détection (3) présentent au moins un capteur (17) pour déterminer une position de rotation et/ou pour déterminer les changements de position de rotation et/ou pour déterminer le changement de position de translation de la torche (1).

3. Dispositif (10) selon l'une quelconque des revendications 1 ou 2, **caractérisé en ce que** le moyen de détection (3) détermine la vitesse et/ou l'accélération d'un déplacement en translation et/ou en rotation de la torche (1).

4. Dispositif (10) selon l'une quelconque des revendications précédentes, **caractérisé en ce que** pendant le processus d'usinage, la torche (1) peut être guidée manuellement ou par un dispositif de manutention, en particulier par un robot soudeur.

5. Dispositif (10) selon l'une quelconque des revendications précédentes, **caractérisé en ce que** la position de référence de la torche (1) et/ou un point de référence dans l'espace peut/peuvent être sélectionné(s) par l'opérateur et/ou par les dispositifs de commande et/ou de régulation (4, 5).

6. Dispositif (10) selon l'une quelconque des revendications précédentes, **caractérisé en ce que** le dispositif de commande et/ou de régulation (4, 5) détermine en fonction de la position de référence sélectionnée et/ou de la position et/ou d'un changement de position de la torche (1) déterminé(e)s par le moyen de détection (3) la puissance d'aspiration en fonction d'un diagramme caractéristique qui présente des grandeurs caractéristiques de procédé antipollution et présentes sous forme de paramètres de processus dans la source de courant de soudage (23), en particulier l'intensité de courant, de préférence l'intensité de courant efficace et/ou de pointe, la puissance de soudage et/ou la vitesse de soudage ainsi que le diamètre de fil métallique ou d'électrode, le type de métal d'apport et le type de gaz inerte.

7. Dispositif (10) selon l'une quelconque des revendications précédentes, **caractérisé en ce que** le débit volumique du dispositif d'aspiration (2) augmente, de préférence en continu, avec un angle d'attaque (6) ou un angle d'inclinaison de torche croissant.

8. Dispositif (10) selon l'une quelconque des revendications précédentes, **caractérisé en ce que** le débit volumique est effectué au niveau de la buse d'aspiration (13) par la variation d'au moins une ouverture de dérivation (7) pour le courant de gaz sur la torche (1) ou sur le tuyau d'aspiration côté torche (8) ou sur le tuyau d'aspiration côté appareil d'aspiration (12) ou sur le boîtier de raccordement (15) ou sur le dispositif d'aspiration (2) ou par la variation d'un ou de plusieurs obturateurs (11) sur la torche (1) ou sur le tuyau d'aspiration côté torche (8) ou sur le tuyau d'aspiration côté appareil d'aspiration (12) ou sur le boîtier de raccordement (15) ou sur le dispositif d'aspiration (2).

9. Dispositif (10) selon l'une quelconque des revendications précédentes, **caractérisé en ce que** les moyens de détection (3) sont disposés, de préférence intégrés, dans la torche (1) ou dans le raccordement avec le tuyau d'aspiration côté torche (8).

10. Dispositif (10) selon l'une quelconque des revendications précédentes, **caractérisé en ce que** les moyens de capteur (3) sont réalisés sous la forme d'au moins un capteur à effet électronique, inductif, capacitif, optique et/ou mécanique, en particulier d'un capteur d'inclinaison ou d'un gyroscope.

11. Dispositif (10) selon l'une quelconque des revendications précédentes, **caractérisé en ce que** les moyens de capteur (3) sont fixés à la main du soudeur, à un dispositif mécanique de guidage de torche (19) ou à un dispositif d'arrêt (20) ou au bras (22) du robot (21).

12. Dispositif (10) selon l'une quelconque des revendications précédentes, **caractérisé en ce que** le signal de commande pour l'inclinaison de la torche (1) est dérivé d'une information d'orientation de robot de la tête de torche.

13. Dispositif (10) selon l'une quelconque des revendications précédentes, **caractérisé en ce que** la transmission de signal entre le moyen de détection (3) et le dispositif de commande (4) pour la puissance d'aspiration est effectuée avec ou sans fil par radio ou par des signaux optiques.

14. Dispositif (10) selon l'une quelconque des revendications précédentes, **caractérisé en ce que** la torche (1) et le tuyau d'aspiration côté torche (8) sont mis en relation active au moyen d'une articulation (9), en particulier d'une rotule, les moyens de capteur (3) étant disposés au niveau de la rotule (9).
